# EUROPEAN PATENT SPECIFICATION

(11) **EP 3 664 084 B1**
(45) Date of publication and mention of the grant of the patent: **17.04.2024**
(21) Application number: 18870750.9
(22) Date of filing: 19.07.2018
(51) Int. Cl.: G10L 21/02, G10L 19/26, G10L 25/30, G10L 19/02

(54) **ELECTRONIC DEVICE AND CONTROL METHOD THEREFOR**
ELEKTRONISCHE VORRICHTUNG UND STEUERUNGSVERFAHREN DAFÜR
DISPOSITIF ÉLECTRONIQUE ET PROCÉDÉ DE COMMANDE ASSOCIÉ

(30) Priority: 25.10.2017 US 201762576887 P
(43) Date of publication of application: 10.06.2020
(73) Proprietor: Samsung Electronics Co., Ltd., Suwon-si, Gyeonggi-do 16677 (KR)
(72) Inventor: CHOO, Ki-hyun, Suwon-si, Gyeonggi-do, 16677 (KR); POROV, Anton, Moscow, 127018 (RU); JEONG, Jong-hoon, Suwon-si, Gyeonggi-do, 16677 (KR); SUNG, Ho-sang, Suwon-si, Gyeonggi-do, 16677 (KR); OH, Eun-mi, Suwon-si, Gyeonggi-do, 16677 (KR); RYU, Jong-youb, Suwon-si, Gyeonggi-do, 16677 (KR)
(74) Representative: Gulde & Partner
(86) International application number: PCT/KR2018/008149
(87) International publication number: WO 2019/083130

(56) References cited:
- KR-A- 20090 037 692
- KR-A- 20090 038 480
- KR-A- 20120 072 243
- KR-A- 20160 120 730
- US-A1- 2015 066 499
- SE RIM PARK ET AL: "A Fully Convolutional Neural Network for Speech Enhancement", ARXIV.ORG, CORNELL UNIVERSITY LIBRARY, 201 OLIN LIBRARY CORNELL UNIVERSITY ITHACA, NY 14853, 22 September 2016 (2016-09-22), XP080813105,
- POROV ANTON ET AL: "Music Enhancement by a Novel CNN Architecture", AES CONVENTION 145; OCTOBER 2018, AES, 60 EAST 42ND STREET, ROOM 2520 NEW YORK 10165-2520, USA, 7 October 2018 (2018-10-07), XP040699106,

## Description

### [Technical Field]

This disclosure relates to an electronic apparatus and a controlling method thereof and, more particularly, to an electronic apparatus capable of reconstructing sound quality of audio and a controlling method thereof.

### [Background Art]

An artificial intelligence (Al) system is a computer system that implements a human-level intelligence and a system in which a machine learns, judges, and becomes smart, unlike an existing rule-based smart system. As the use of Al systems improves, a recognition rate and understanding or anticipation of a user's taste may be performed more accurately. As such, existing rule-based smart systems are gradually being replaced by deep learning-based Al systems.

AI technology is composed of machine learning (for example, deep learning) and elementary technologies that utilize machine learning.

Machine learning is an algorithm technology that is capable of classifying or learning characteristics of input data. Element technology is a technology that uses machine learning algorithms such as deep learning. Machine learning is composed of technical fields such as linguistic understanding, visual understanding, reasoning, prediction, knowledge representation, motion control, or the like.

Various fields in which AI technology is applied are as shown below. Linguistic understanding is a technology for recognizing, applying, and/or processing human language or characters and includes natural language processing, machine translation, dialogue system, question and answer, voice recognition or synthesis, and the like. Visual understanding is a technique for recognizing and processing objects as human vision, including object recognition, object tracking, image search, human recognition, scene understanding, spatial understanding, image enhancement, and the like. Inference prediction is a technique for judging and logically inferring and predicting information, including knowledge-based and probability-based inference, optimization prediction, preference-based planning, recommendation, or the like. Knowledge representation is a technology for automating human experience information into knowledge data, including knowledge building (data generation or classification), knowledge management (data utilization), or the like. Motion control is a technique for controlling the autonomous running of the vehicle and the motion of the robot, including motion control (navigation, collision, driving), operation control (behavior control), or the like.

Recently, research has been actively conducted on machine learning, which is an algorithm capable of recognizing objects like humans and understanding information, as big data collection and storage are enabled by development of hardware technology and computer capabilities and techniques for analyzing thereof are becoming more sophisticated and accelerated. In particular, in the machine learning technical field, research on deep learning in an autonomous learning scheme using a neural network has been actively conducted.

The neural network is an algorithm for determining the final output by comparing the activation function to a particular boundary value for the sum which is acquired by multiplying a plurality of inputs by a weight, based on the intent to aggressively mimic the function of the human brain and is generally formed of a plurality of layers. A convolutional neural network (CNN), which is widely used for image recognition, a recurrent neural network (RNN), which is widely used for speech recognition, and the like are representative examples.

The disclosure provides a method for learning audio data using a neural network and reconstructing damaged audio data. When an audio signal is compressed or transmitted, an audio signal of some frequency band may be lost for efficient compression or transmission. The audio signal from which data in some frequency band is lost may have degraded sound quality or changed tone as compared to the audio signal before being lost.

An automobile is a representative location where music is consumed primarily, but due to the expanded use of the compressed/degraded sound source, a user cannot help listening to music with generally degraded sound quality.

Accordingly, if the audio signal including the lost frequency band is to be reproduced to be close to the original sound with a high sound quality, it is required to effectively reconstruct the audio signal in the lost frequency band. SE RIM PARK ET AL: "A Fully Convolutional Neural Network for Speech Enhancement", ARXIV.ORG, CORNELL UNIVERSITY LIBRARY, 201 OLIN LIBRARY CORNELL UNIVERSITY ITHACA, NY 14853, 22 September 2016 (2016-09-22), discloses speech enhancement using a CNN.

### [Disclosure]

### [Technical Problem]

The disclosure provides an electronic apparatus in which an effective reconstruction is performed so that a user may enjoy a high quality sound even in a compressed or degraded sound source and a method for controlling thereof.

### [Technical Solution]

The invention is set out in the appended claims.

### [Effect of Invention]

According to various embodiments, even a sound source degraded due to compression can enable a user to enjoy sound in a level of an original sound, and radio resource waste due to high bandwidth data transmission can be reduced.

### [Description of Drawings]

FIG. 1 is a block diagram briefly illustrating a configuration of an electronic apparatus according to an embodiment;
FIG. 2 is a view illustrating spectrogram of a damaged audio signal according to an embodiment;
FIG. 3 is a view illustrating a process of converting a damaged audio signal to a spectrogram format according to an embodiment;
FIG. 4 is a view illustrating dividing a spectrogram of a damaged audio signal by data of each frequency band according to an embodiment;
FIG. 5 is a view illustrating a method for reconstructing a damaged audio signal using CNN according to an embodiment;
FIGS. 6 and 7 are views illustrating a method for reconstructing a damaged audio using CNN according to another embodiment;
FIG. 8 is a view illustrating a method for designing CNN for reconstructing a damaged audio signal according to an embodiment; and
FIG. 9 is a flowchart to describe a method for controlling an electronic apparatus according to an embodiment.

### [Best Mode]

-

### [Mode for Invention]

Prior to specifying the embodiment, a drafting method of the disclosure and drawings will be described.

Further, like reference numerals indicate like components that perform substantially the same functions throughout the specification. For convenience of descriptions and understanding, the same reference numerals or symbols are used and described in different embodiments. In other words, although elements having the same reference numerals are all illustrated in a plurality of drawings, the plurality of drawings do not mean one embodiment.

The terms such as "first," "second," and so on may be used to describe a variety of elements, but the elements should not be limited by these terms. The terms are used only for the purpose of distinguishing one element from another. For example, the elements associated with the ordinal numbers should not be limited in order or order of use by the numbers. If necessary, the ordinal numbers may be replaced with each other.

A singular expression includes a plural expression, unless otherwise specified. It is to be understood that the terms such as "comprise," "include," or "consist of" are used herein to designate a presence of a characteristic, number, step, operation, element, component, or a combination thereof, and not to preclude a presence or a possibility of adding one or more of other characteristics, numbers, steps, operations, elements, components or a combination thereof.

The term such as "module," "unit," "part", and so on is used to refer to an element that performs at least one function or operation, and such element may be implemented as hardware or software, or a combination of hardware and software. Further, except for when each of a plurality of "modules", "units", "parts", and the like needs to be realized in an individual hardware, the components may be integrated in at least one module or chip and be realized in at least one processor (not shown).

Also, when any part is connected to another part, this includes a direct connection and an indirect connection through another medium. Further, when a certain portion includes a certain element, unless specified to the contrary, this means that another element may be additionally included, rather than precluding another element.

Hereinafter, an embodiment will be described in greater detail referring to attached drawings.

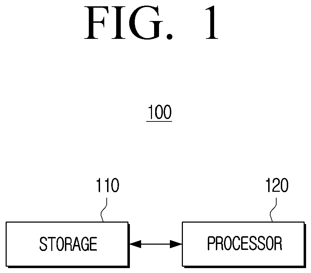

FIG. 1 is a block diagram briefly illustrating a configuration of an electronic apparatus according to an embodiment.

Referring to FIG. 1, an electronic apparatus 100 according to an embodiment includes a storage 110 and a processor 120.

The electronic apparatus 100 may be implemented as an electronic apparatus such as a smartphone, a tablet personal computer (PC), car audio, audio-exclusive player such as MP3 player, a personal digital assistant (PDA), or the like. The electronic apparatus 100 may be implemented as various electronic apparatuses capable of reproducing audio.

The storage 110 may store a plurality of convolutional neural network (CNN) models and a plurality of filters trained in each of the plurality of CNN models.

The CNN model may be designed to simulate human brain structure on computer and may include a plurality of network modes that simulate neurons of human neural network and have a weight. The plurality of network nodes may each establish a connection relation so that the neurons simulate synaptic activity of transmitting and receiving signals through synapses. In the learned CNN model, a plurality of network nodes is located at different depths (or layers) and may exchange data according to a convolution connection relation. For example, learned models may include recurrent neural network (RNN), and bidirectional recurrent deep neural network (BRDNN), in addition to CNN, but are not limited thereto.

The filter is a mask having a weight and is defined as matrix of data and may be referred to as a window or kernel.

For example, a filter may be applied to the input data input to the CNN, and the sum (convolution operation) of values acquired by multiplying the input data by the filters, respectively, may be determined as output data (feature maps). The input data can be extracted into a plurality of data through multiple filters, and a plurality of feature maps can be derived according to the number of filters. Such a convolution operation may be repeated by a plurality of CNNs that form multiple layers.

As described above, by combining multiple filters capable of extracting different features and applying the filters into input data, it is possible to determine which feature the inputted original data includes.

There may be a plurality of CNNs for each layer, and filters trained or learned in each CNN may be stored separately.

The processor 120 is configured to control the overall operation of the electronic apparatus 100. The processor 120 is configured to acquire a spectrogram corresponding to the damaged audio signal and to output the reconstructed audio signal by applying a plurality of filters trained in the plurality of CNNs to the acquired spectrogram.

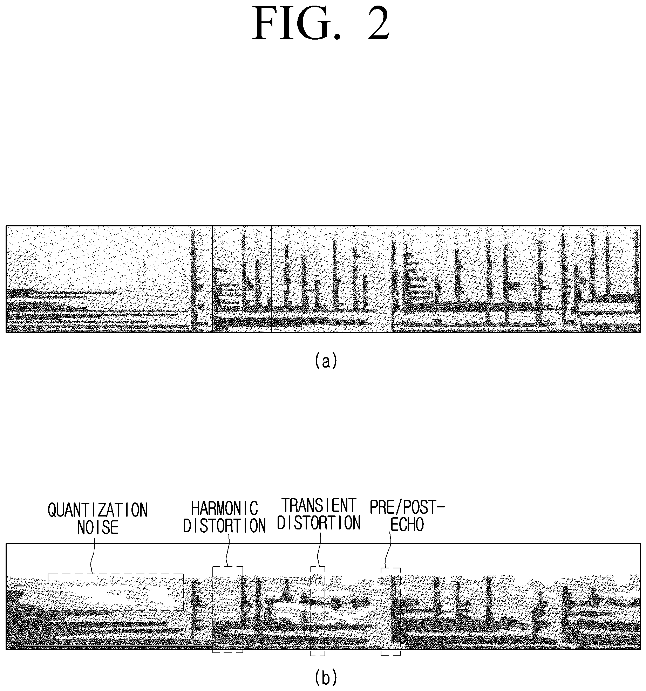

Specifically, the processor 120 acquires a first spectrogram corresponding to the damaged audio signal. As shown in FIG. 2, the processor 120 may transform the waveform of the damaged audio signal to a first spectrogram represented by time and frequency. The first spectrogram represents a change in frequency and amplitude of the damaged audio signal over time.

The processor 120 may perform a transformation of the damaged audio signal based on a modified discrete cosine transform (MDCT) and a modified discrete sine transform (MDST), and may represent the damaged audio signal as spectrogram data using a quadrature mirror filter (QMF).

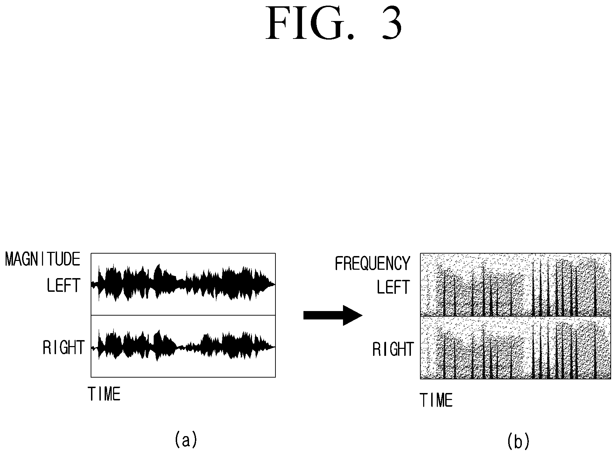

FIGS. 3A and 3B illustrate spectrogram of an audio signal (original sound) before being damaged and spectrogram of the audio signal damaged due to compression, or the like.

As illustrated in FIG. 3B, compressed audio includes signal distortion due to compression, such as pre-echo (forward echo) and post echo, transient distortion, harmonic distortion, quantization noise, and the like. In particular, these signals are frequently generated in the high frequency region.

The processor 120 inputs the first spectrogram to corresponding CNNs for each frequency band. However, in consideration of the features of the CNNs and the audio signal, the processor 120 may extract an amplitude component and a phase component from the first spectrogram, and input only the extracted amplitude component to the corresponding CNNs for each frequency band. That is, the reconstruction of the damaged audio signal is made with respect to amplitude, and the phase of the damaged audio signal can be used as it is.

The processor 120 may perform reconstructing for amplitude component of compressed audio using CNN (frequency-time dependent CNN (FTD-CNN)) based on frequency and time.

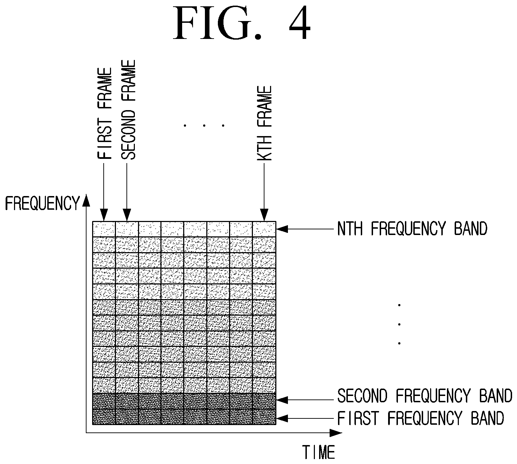

FIG. 4 is a view illustrating dividing a spectrogram of a damaged audio signal by data for each frequency band according to an embodiment.

The processor 120 may divide the first spectrogram of a predetermined time zone by frequency bands (first frequency band to N^{th} frequency band), identify the first spectrogram in a frame unit of a predetermined time interval, and divide the first spectrogram into a first frame to a K^{th} frame by frame units. That is, the first to K^{th} frames are grouped in units input to the CNN, and one group can form K time slots. Here, the K^{th} frame of the first spectrogram corresponds to the current frame to be reconstructed.

The processor 120 may perform reconstruction on the amplitude component of the entire frequency band of the first spectrogram, or may input only the data corresponding to the frequency band (high frequency band) above a predetermined magnitude among the frequency bands of the first spectrogram to the CNN, and maintain the data corresponding to the frequency band (low frequency band) below the predetermined magnitude without reconstructing.

The processor 120 may apply a plurality of filters stored in the storage 110 relative to the first spectrogram input to each CNN for each frequency band and acquire the second spectrogram by merging output values of each CNN to which a plurality of filters are applied.

The processor 120 acquires the reconstructed audio signal based on the second spectrogram acquired as shown above.

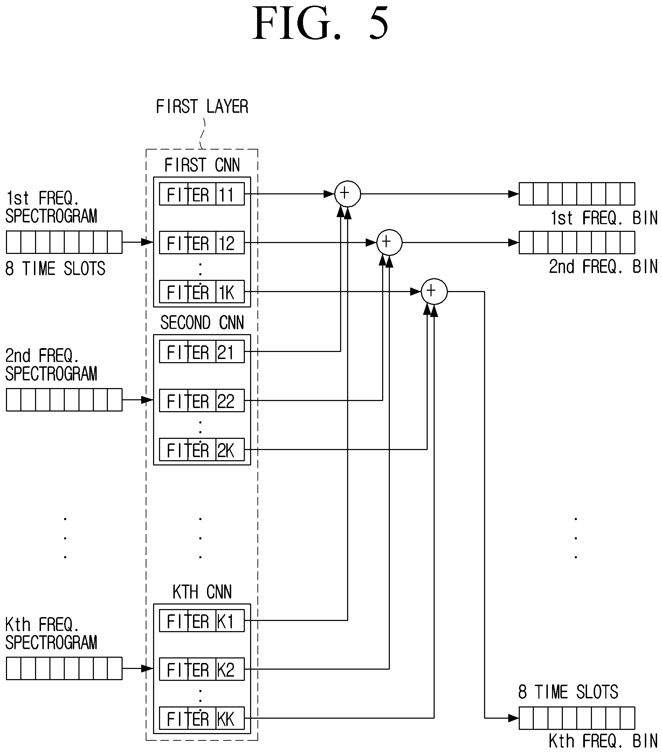

FIG. 5 is a view illustrating a method for reconstructing a damaged audio signal using CNN according to an embodiment.

As illustrated in FIG. 5, data corresponding to the spectrogram of the first frequency band to the K^{th} frequency band, among the divided frequency bands, are input to each of the first CNN to the K^{th} CNN forming the first layer, respectively.

That is, the spectrogram of the first frequency band is input to the first CNN and is filtered by the pre-trained filters 11 to 1K corresponding to the first CNN. Similarly, the spectrogram of the second frequency band is input to the second CNN and is filtered by the pre-trained filters 21 to 2K corresponding to the second CNN. By this process, the spectrogram of the K^{th} frequency band is input to the K^{th} CNN and is filtered by the pre-trained filters K0 to KK corresponding to the K^{th} CNN.

As described above, in each CNN, the number of filters corresponding to the number (K) of the divided frequency bands is applied to the spectrogram of each frequency band. Here, filters 11, 21 to K1 of each CNN are filters trained based on the first frequency band, and filters 12, 22 to K2 are filters trained based on the second frequency band. Similarly, the filters 1K, 2K to KK of each CNN refer to filters trained based on the K^{th} frequency band. In addition, each filter has the same size.

Learning of the filter is performed based on the results for the entire band. The filter value is determined by combining the spectrogram of the first frequency band generated by adding the result of 11, 21..., and K1, and the result of combining the spectrogram of the K^{th} frequency band generated by adding the result of 1K, 2K, and KK. If the filter value is determined in this manner, the adjacent spectrum may be considered on the time axis, and the signal generation may be performed in consideration of the entire frequency band. Therefore, according to an embodiment, a local time relationship may be processed in consideration of a global frequency relationship.

Although omitted in the drawings, the filtering process may be performed through a plurality of layers, such as a second layer and a third layer in the same manner as the first layer. That is, by stacking a plurality of layers to configure the final network, each of the predefined filters may be trained in a direction that minimizes the error between the desired target spectrum and the processed spectrum based on the result of the entire layer.

The processor 120 may acquire the second spectrogram corresponding to the first frequency band by merging output values in which the spectrogram of the first to K^{th} frequency bands in each CNN are filtered by filters 11 to K1 that are trained based on the first frequency band.

Similarly, the processor 120 may acquire the second spectrogram corresponding to the second frequency band by merging the output values in which the spectrogram of the first to K^{th} frequency bands in each CNN is filtered by filters 12 to K2 trained by the second frequency band.

The processor 120 may acquire the second spectrogram corresponding to the K^{th} frequency band by merging the output values in which the spectrogram of the first to K^{th} frequency bands in each CNN is filtered based on filters 1K to KK that are trained based on the K^{th} frequency band.

The processor 120 may acquire the second spectrogram corresponding to the entire frequency band accordingly.

According to an embodiment, by performing padding for the first spectrogram, the second spectrogram may have the same magnitude as the first spectrogram.

As the padding operation is omitted, the second spectrogram may have a smaller magnitude than the first spectrogram. For example, if the magnitude of the first spectrogram is 8, that is, when the first spectrogram consists of eight frames, if the size of the filter is 2, the magnitude of the second spectrogram becomes "7." If padding is applied, the magnitude of the second spectrogram is maintained to be "8."

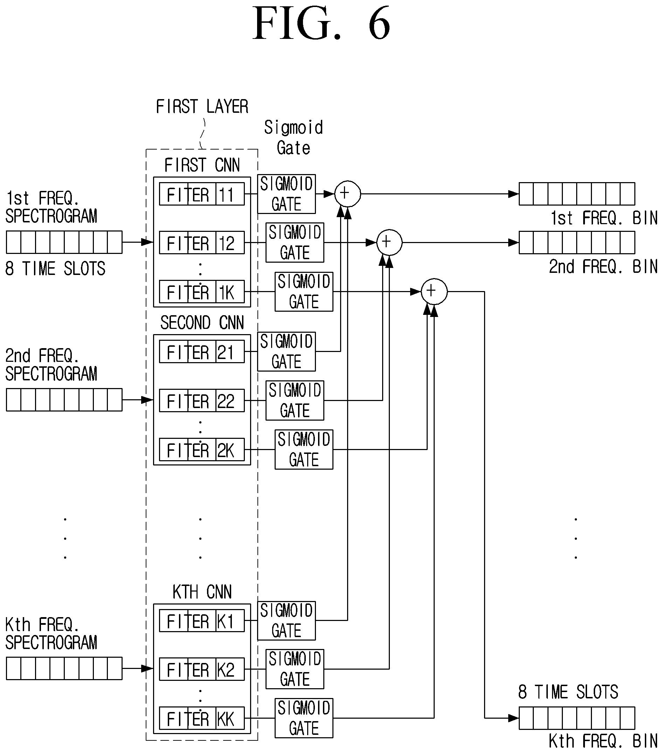

As illustrated in FIG. 6, a sigmoid function may be applied to the result value output from each layer of the plurality of CNNs or the result value (feature map) output from the final layer. For this purpose, as illustrated in FIG. 6, a sigmoid gate to which an output value filtered by each filter is input to the end of each CNN in each layer or final layer can be additionally included. The sigmoid gate may be disposed at each terminal through which an output value by a filter applied at each CNN of a plurality of layers is output.

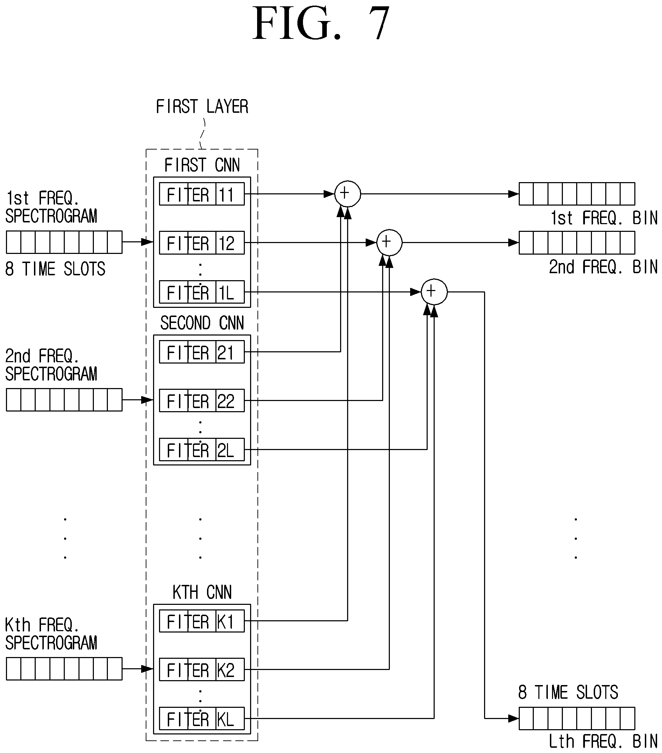

According to another embodiment of FIG. 7, L number of filters may be applied to the spectrogram of each frequency band, instead of the K number of frequency bands divided in each CNN. In this case, the output second spectrogram may be data in which frequency is extended to the L frequency band.

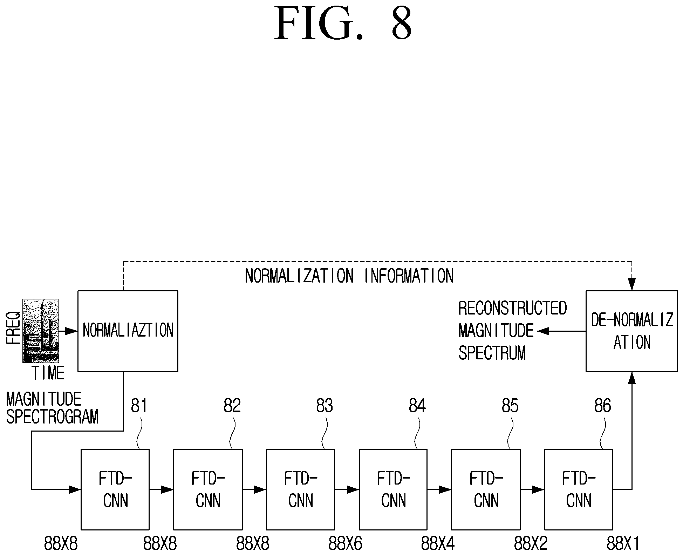

FIG. 8 is a view illustrating a method for designing CNN for reconstructing a damaged audio signal according to an embodiment.

As shown in FIG. 8, the processor 120 performs normalization on the spectrogram (first spectrogram) of the damaged audio signal, and extracts the amplitude component in the first spectrogram for which normalization is performed. The processor 120 may enter input data corresponding to an amplitude component of the extracted first spectrogram into a plurality of CNN layers comprised of at least one CNN.

According to FIG. 8, the input data may pass through a plurality of CNN layers. A first layer 81 and a second layer 82 of the plurality of CNN layers maintain the magnitude of the input data by padding, and a third layer 83 may reduce the magnitude of the input data passing through the second layer 82 to 6. The fourth layer 84 may reduce the size of the input data passing through the third layer 83 to 4. The fifth layer 85 may reduce the size of the input data passing through the fourth layer 84 to 2, and the sixth layer 86 may reduce the size of the input data passing through the fifth layer 85 to 1.

That is, the sizes of the filter that are applied to input data by a plurality of CNN layers are different from each other, and a plurality of CNN layers may be disposed to make output data having the size of 1 be finally outputted.

The processor 120 may perform de-normalization of the output data passing through the plurality of CNN layers to acquire reconstructed data of the input data corresponding to the amplitude component. The processor 120 may perform de-normalization with respect to the output data using the stored normalization information when normalization is performed on the input data.

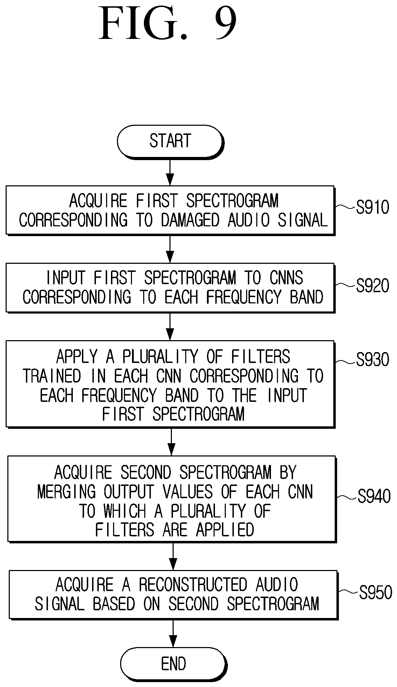

FIG. 9 is a flowchart to describe a method for controlling an electronic apparatus according to an embodiment.

A first spectrogram corresponding to a damaged audio signal is acquired in operation S910. The damaged audio signal may be input, and the input audio signal may be transformed to a first spectrogram based on time and frequency.

Thereafter, the first spectrogram is input to the corresponding CNN for each frequency band in operation S920. The first spectrogram is identified in a frame unit, and a current frame and a predetermined number of previous frames are grouped and input into a corresponding CNN for each frequency band. In addition, a magnitude component may be acquired in the first spectrogram and input to a corresponding CNN for each frequency band. A frequency band that is greater than or equal to a predetermined magnitude among the frequency bands of the first spectrogram may be input to the corresponding CNN.

A plurality of filters trained in each of the CNNs corresponding to each frequency band are applied to the input first spectrogram in operation S930.

The output values of each CNN to which the plurality of filters are applied are merged to acquire a second spectrogram in operation S940. At this time, the output values of each CNN may be merged to acquire a reconstructed current frame. According to an embodiment, a first spectrogram for each frequency band to which a plurality of filters are applied is input to a sigmoid gate, and a first spectrogram for each frequency band outputted from the sigmoid gate may be merged to acquire a second spectrogram. The second spectrogram may also be acquired by combining the phase component of the first spectrogram and the magnitude component compensated by the CNN.

The reconstructed audio signal is acquired based on the second spectrogram in operation S950. At this time, the second spectrogram may be inverse-transformed into an audio signal based on time and magnitude to acquire a reconstructed audio signal.

According to various embodiments as described above, even a sound source degraded due to compression can enable a user to enjoy a sound in a level of an original sound, and the waste of radio resources due to high bandwidth data transmission may be reduced. Accordingly, an audio device owned by a user may be fully utilized.

The controlling method according to the various embodiments described above can be implemented as a program and stored in various recording media. That is, a computer program that can be processed by various processors to execute the various controlling methods described above may be used in a state stored in a recording medium.

As an example, a non-transitory computer readable medium storing there in a program for performing the steps of acquiring a first spectrogram corresponding to a damaged audio signal, inputting a first spectrogram to a corresponding CNN for each frequency band, applying a plurality of filters trained in each of the CNN corresponding to each frequency band in the input first spectrogram, merging the output values of each CNN to which the plurality of filters are applied to acquire a second spectrogram, and acquiring the reconstructed audio signal based on the second spectrogram may be provided.

The non-transitory computer readable medium refers to a medium that stores data semi-permanently rather than storing data for a very short time, such as a register, a cache, a memory or etc., and is readable by an apparatus. The aforementioned various applications or programs may be stored in the non-transitory computer readable medium, for example, a compact disc (CD), a digital versatile disc (DVD), a hard disc, a Blu-ray disc, a universal serial bus (USB), a memory card, a read only memory (ROM), and the like, and may be provided.

## Claims

1. An electronic apparatus (100) comprising:
a storage (110) for storing a plurality of filters trained in each of a plurality of convolutional neural networks, CNNs, corresponding to a plurality of frequency bands of a first spectrogram corresponding to a damaged audio signal respectively, the plurality of filters in each CNN corresponding to the plurality of frequency bands respectively; and
a processor (120) configured to:
acquire the first spectrogram,
input each of the plurality of frequency bands of the first spectrogram to a corresponding one of the plurality of CNNs to apply the plurality of filters trained in the corresponding one of the plurality of CNNs to the frequency band which is input to the corresponding one of the plurality of CNNs,
acquire a second spectrogram of the plurality of frequency bands, wherein each frequency band of the second spectrogram is acquired by a summation of output values of the filters corresponding to the same respective frequency band, and
acquire an audio signal reconstructed based on the second spectrogram.

2. The electronic apparatus (100) of claim 1, wherein:
the plurality of CNNs comprise a first CNN into which a first frequency band of the first spectrogram is input and a second CNN into which a second frequency band of the first spectrogram is input,
the plurality of filters comprise a first filter and a second filter trained in the first CNN and a third filter and a fourth filter trained in the second CNN,
the first filter and third filter are trained based on the first frequency band and the second filter and the fourth filter are trained based on the second frequency band,
the processor (120) is further configured to:
acquire the first frequency band of the second spectrogram by a summation of output values of the first CNN in which the first filter is applied and output values of the second CNN in which the third filter is applied, and acquire the second frequency band of the second spectrogram by a summation of output values of the first CNN in which the second filter is applied and output values of the second CNN in which the fourth filter is applied.

3. The electronic apparatus (100) of claim 1, wherein the processor (120) is further configured to:
identify the first spectrogram in a frame unit of a predetermined time interval,
divide the first spectrogram into a first frame to a K^{th} frame by frame units.

4. The electronic apparatus (100) of claim 1, wherein the plurality of CNNs constitute a first CNN layer,
wherein the processor (120) is further configured to:
acquire the second spectrogram by inputting output values of the first CNN layer to a second CNN layer comprising a plurality of other CNNs, wherein a plurality of filters are trained in each of the CNNs of the second CNN layer, the plurality of filters in each CNN of the second CNN layer corresponds to the plurality of frequency bands respectively, and wherein each frequency band of the second spectrogram is acquired by a summation of output values of the second CNN layer's filters corresponding to the same respective frequency band.

5. The electronic apparatus (100) of claim 1, wherein the processor (120) is further configured to input the output values of the filters to a plurality of sigmoid gates respectively, and acquire the second spectrogram by a summation of the values output from the plurality of sigmoid gates corresponding to the same respective frequency band.

6. The electronic apparatus (100) of claim 1, further comprising:
an inputter,
wherein the processor (120) is further configured to:
transform the damaged audio signal input through the inputter to the first spectrogram based on time and frequency, and
acquire the reconstructed audio signal by inverse transforming the second spectrogram to an audio signal based on time and magnitude.

7. The electronic apparatus (100) of claim 6, wherein the processor (120) is further configured to acquire a compensated magnitude component by acquiring a magnitude component of the first spectrogram and inputting each of the frequency bands of the acquired magnitude component, which correspond to the frequency bands of the first spectrogram, to a corresponding one of the plurality of CNNs and acquire the second spectrogram by combining a phase component of the first spectrogram and the compensated magnitude component represented by the output values of the summation.

8. The electronic apparatus (100) of claim 1, wherein the processor (120) is configured to only input frequency bands which are greater than or equal to a predetermined frequency, among the plurality of frequency bands of the first spectrogram, to the corresponding CNNs.

9. The electronic apparatus (100) of claim 1, wherein the processor (120) is further configured to normalize the first spectrogram and input each of the plurality of frequency bands of the normalized first spectrogram to the corresponding one of the plurality of CNNs, denormalize the second spectrogram, and acquire the reconstructed audio signal based on the denormalized second spectrogram.

10. A method of controlling an electronic apparatus (100), the method comprising:
acquiring a first spectrogram corresponding to a damaged audio signal, a plurality of convolutional neural networks, CNNs corresponding to a plurality of frequency bands of the first spectrogram respectively, a plurality of filters in each CNN corresponding to the plurality of frequency bands respectively;
inputting each of the plurality of frequency bands of the first spectrogram to a corresponding one of the plurality of CNNs to apply the plurality of filters trained in the corresponding one of the plurality of CNNs to the frequency band which is input to the corresponding one of the plurality of CNNs;
acquiring a second spectrogram of the plurality of frequency bands, wherein each frequency band of the second spectrogram is acquired by a summation of output values of the filters corresponding to the same respective frequency band; and
acquiring an audio signal reconstructed based on the second spectrogram.

11. The method of claim 10, wherein:
the plurality of CNNs comprise a first CNN into which a first frequency band of the first spectrogram is input and a second CNN into which a second frequency band of the first spectrogram is input,
the plurality of filters comprise a first filter and a second filter trained in the first CNN and a third filter and a fourth filter trained in the second CNN,
the first filter and third filter are trained based on the first frequency band and the second filter and the fourth filter are trained based on the second frequency band,
the acquiring the second spectrogram comprises acquiring the first frequency band of the second spectrogram by a summation of output values of the first CNN in which the first filter is applied and output values of the second CNN in which the third filter is applied, and acquiring the second frequency band of the second spectrogram by a summation of output values of the first CNN in which the second filter is applied and output values of the second CNN in which the fourth filter is applied.

12. The method of claim 10, wherein the inputting comprises identifying the first spectrogram in a frame unit of a predetermined time interval, dividing the first spectrogram into a first frame to a K^{th} frame by frame units.

13. The method of claim 10, wherein the plurality of CNNs constitute a first CNN layer, and wherein the acquiring the second spectrogram comprises acquiring the second spectrogram by inputting output values of the first CNN layer to a second CNN layer comprising a plurality of other CNNs, wherein a plurality of filters are trained in each of the CNNs of the second CNN layer, the plurality of filters in each CNN of the second CNN layer corresponds to the plurality of frequency bands respectively, and wherein each frequency band of the second spectrogram is acquired by a summation of output values of the second CNN layer's filters corresponding to the same respective frequency band.

14. The method of claim 10, wherein the acquiring the second spectrogram comprises inputting the output values of the filters to a plurality of sigmoid gates respectively, and acquiring the second spectrogram by a summation of the values output from the plurality of sigmoid gates corresponding to the same respective frequency band.

15. A non-transitory computer readable medium having stored therein a computer instruction which, when executed by a processor (120) of an electronic apparatus (100), cause the processor to perform the following method steps:
acquiring a first spectrogram corresponding to a damaged audio signal, a plurality of convolutional neural networks, CNNs corresponding to a plurality of frequency bands of the first spectrogram respectively, a plurality of filters in each CNN corresponding to the plurality of frequency bands respectively;
inputting each of the plurality of frequency bands of the first spectrogram to a corresponding one of the plurality of CNNs to apply the plurality of filters trained in the corresponding one of the plurality of CNNs to the frequency band which is input to the corresponding one of the plurality of CNNs;
acquiring a second spectrogram of the plurality of frequency bands, wherein each frequency band of the second spectrogram is acquired by a summation of output values of the filters corresponding to the same respective frequency band; and
acquiring an audio signal reconstructed based on the second spectrogram.

## Patentansprüche

1. Elektronische Vorrichtung (100), die Folgendes umfasst:
einen Speicher (110) zum Speichern einer Vielzahl von Filtern, die in jedem einer Vielzahl von neuronalen Faltungsnetzwerken, CNNs, trainiert werden, die jeweils einer Vielzahl von Frequenzbändern eines ersten Spektrogramms entsprechen, das einem beschädigten Audiosignal entspricht, wobei die Vielzahl von Filtern in jedem CNN jeweils der Vielzahl von Frequenzbändern entspricht; und
einen Prozessor (120), der konfiguriert ist zum:
Erfassen des ersten Spektrogramms,
Eingeben jedes der Vielzahl von Frequenzbändern des ersten Spektrogramms in ein entsprechendes eines der Vielzahl von CNNs, um die Vielzahl von Filtern, die in dem entsprechenden einen der Vielzahl von CNNs trainiert werden, auf das Frequenzband anzuwenden, das in das entsprechende eine der Vielzahl von CNNs eingegeben wird,
Erfassen eines zweiten Spektrogramms der Vielzahl von Frequenzbändern, wobei jedes Frequenzband des zweiten Spektrogramms durch eine Summierung von Ausgangswerten der Filter erfasst wird, die demselben jeweiligen Frequenzband entsprechen, und
Erfassen eines auf der Grundlage des zweiten Spektrogramms rekonstruiertem Audiosignals.

2. Elektronische Vorrichtung (100) nach Anspruch 1, wobei:
die Vielzahl von CNNs ein erstes CNN, in das ein erstes Frequenzband des ersten Spektrogramms eingegeben wird, und ein zweites CNN, in das ein zweites Frequenzband des ersten Spektrogramms eingegeben wird, umfasst,
die Vielzahl von Filtern einen ersten Filter und einen zweiten Filter, die in dem ersten CNN trainiert werden, und einen dritten Filter und einen vierten Filter, die in dem zweiten CNN trainiert werden, umfasst,
der erste Filter und der dritte Filter auf der Grundlage des ersten Frequenzbandes trainiert werden und der zweite Filter und der vierte Filter auf der Grundlage des zweiten Frequenzbandes trainiert werden,
der Prozessor (120) ferner konfiguriert ist, um :
das erste Frequenzband des zweiten Spektrogramms durch eine Summierung von Ausgangswerten des ersten CNN, in dem der erste Filter angewendet wird, und von Ausgangswerten des zweiten CNN, in dem der dritte Filter angewendet wird, zu erfassen, und das zweite Frequenzband des zweiten Spektrogramms durch eine Summierung von Ausgangswerten des ersten CNN, in dem der zweite Filter angewendet wird, und von Ausgangswerten des zweiten CNN, in dem der vierte Filter angewendet wird, zu erfassen.

3. Elektronische Vorrichtung (100) nach Anspruch 1, wobei der Prozessor (120) ferner konfiguriert ist, um:
das erste Spektrogramm in einer Rahmeneinheit eines vorbestimmten Zeitintervalls zu identifizieren,
das erste Spektrogramm in einen ersten Rahmen bis zu einem K^{ten} Rahmen durch Rahmeneinheiten zu unterteilen.

4. Elektronische Vorrichtung (100) nach Anspruch 1, wobei die Vielzahl der CNNs eine erste CNN-Schicht bilden,
wobei der Prozessor (120) weiterhin konfiguriert ist zum:
Erfassen des zweiten Spektrogramms durch Eingeben von Ausgangswerten der ersten CNN-Schicht in eine zweite CNN-Schicht, die eine Vielzahl anderer CNNs umfasst, wobei eine Vielzahl von Filtern in jedem der CNNs der zweiten CNN-Schicht trainiert wird, die Vielzahl von Filtern in jedem CNN der zweiten CNN-Schicht jeweils der Vielzahl von Frequenzbändern entspricht, und wobei jedes Frequenzband des zweiten Spektrogramms durch eine Summierung von Ausgangswerten der Filter der zweiten CNN-Schicht erfasst wird, die demselben jeweiligen Frequenzband entsprechen.

5. Elektronische Vorrichtung (100) nach Anspruch 1, wobei der Prozessor (120) ferner konfiguriert ist, um die Ausgangswerte der Filter jeweils in eine Vielzahl von Sigmoid-Gates einzugeben und das zweite Spektrogramm durch eine Summierung der von der Vielzahl von Sigmoid-Gates ausgegebenen Werte zu erfassen, die demselben jeweiligen Frequenzband entsprechen.

6. Elektronische Vorrichtung (100) nach Anspruch 1, die außerdem Folgendes umfasst:
eine Eingabevorrichtung,
wobei der Prozessor (120) weiterhin konfiguriert ist, um:
das beschädigte Audiosignal, das über die Eingabevorrichtung eingegeben wird, auf der Grundlage von Zeit und Frequenz in das erste Spektrogramm umzuwandeln und
das rekonstruierte Audiosignal durch inverse Transformation des zweiten Spektrogramms in ein Audiosignal auf der Grundlage von Zeit und Betrag zu erfassen.

7. Elektronische Vorrichtung (100) nach Anspruch 6, wobei der Prozessor (120) ferner konfiguriert ist, um eine kompensierte Betragskomponente zu erfassen, indem eine Betragskomponente des ersten Spektrogramms erfasst und jedes der Frequenzbänder der erfassten Betragskomponente, die den Frequenzbändern des ersten Spektrogramms entsprechen, in ein entsprechendes eines der Vielzahl von CNNs eingegeben wird, und das zweite Spektrogramm zu erfassen, indem eine Phasenkomponente des ersten Spektrogramms und die kompensierte Betragskomponente, die durch die Ausgangswerte der Summierung dargestellt wird, kombiniert werden.

8. Elektronische Vorrichtung (100) nach Anspruch 1, wobei der Prozessor (120) so konfiguriert ist, dass er nur Frequenzbänder, die größer oder gleich einer vorbestimmten Frequenz sind, aus der Vielzahl von Frequenzbändern des ersten Spektrogramms in die entsprechenden CNNs eingibt.

9. Elektronische Vorrichtung (100) nach Anspruch 1, wobei der Prozessor (120) ferner konfiguriert ist, um das erste Spektrogramm zu normalisieren und jedes der Vielzahl von Frequenzbändern des normalisierten ersten Spektrogramms in das entsprechende eine der Vielzahl von CNNs einzugeben, das zweite Spektrogramm zu denormalisieren und das rekonstruierte Audiosignal auf der Grundlage des denormalisierten zweiten Spektrogramms zu erfassen.

10. Verfahren zur Steuerung einer elektronischen Vorrichtung (100), wobei das Verfahren umfasst:
Erfassen eines ersten Spektrogramms, das einem beschädigten Audiosignal entspricht, einer Vielzahl von neuronalen Faltungsnetzwerken, CNNs, die jeweils einer Vielzahl von Frequenzbändern des ersten Spektrogramms entsprechen, einer Vielzahl von Filtern in jedem CNN, die jeweils der Vielzahl von Frequenzbändern entsprechen;
Eingeben jedes der Vielzahl von Frequenzbändern des ersten Spektrogramms in ein entsprechendes eines aus der Vielzahl von CNNs, um die Vielzahl von Filtern, die in dem entsprechenden einen aus der Vielzahl von CNNs trainiert werden, auf das Frequenzband anzuwenden, das in das entsprechende eine aus der Vielzahl von CNNs eingegeben wird;
Erfassen eines zweiten Spektrogramms der Vielzahl von Frequenzbändern, wobei jedes Frequenzband des zweiten Spektrogramms durch eine Summierung von Ausgangswerten der Filter erfasst wird, die dem gleichen jeweiligen Frequenzband entsprechen; und
Erfassen eines auf der Grundlage des zweiten Spektrogramms rekonstruierten Audiosignals.

11. Verfahren nach Anspruch 10, wobei:
die Vielzahl von CNNs ein erstes CNN, in das ein erstes Frequenzband des ersten Spektrogramms eingegeben wird, und ein zweites CNN, in das ein zweites Frequenzband des ersten Spektrogramms eingegeben wird, umfasst,
die Vielzahl von Filtern einen ersten Filter und einen zweiten Filter, die in dem ersten CNN trainiert werden, und einen dritten Filter und einen vierten Filter, die in dem zweiten CNN trainiert werden, umfasst,
der erste Filter und der dritte Filter auf der Grundlage des ersten Frequenzbandes trainiert werden und der zweite Filter und der vierte Filter auf der Grundlage des zweiten Frequenzbandes trainiert werden,
das Erfassen des zweiten Spektrogramms das Erfassen des ersten Frequenzbandes des zweiten Spektrogramms durch eine Summierung von Ausgangswerten des ersten CNN, in dem der erste Filter angewendet wird, und Ausgangswerten des zweiten CNN, in dem der dritte Filter angewendet wird, und das Erfassen des zweiten Frequenzbandes des zweiten Spektrogramms durch eine Summierung von Ausgangswerten des ersten CNN, in dem der zweite Filter angewendet wird, und Ausgangswerten des zweiten CNN, in dem der vierte Filter angewendet wird, umfasst.

12. Verfahren nach Anspruch 10, wobei das Eingeben das Identifizieren des ersten Spektrogramms in einer Rahmeneinheit eines vorbestimmten Zeitintervalls, das Unterteilen des ersten Spektrogramms in einen ersten Rahmen bis zu einem K^{ten} Rahmen durch Rahmeneinheiten umfasst.

13. Verfahren nach Anspruch 10, wobei die Vielzahl von CNNs eine erste CNN-Schicht bilden, und
wobei das Erfassen des zweiten Spektrogramms das Erfassen des zweiten Spektrogramms durch Eingeben von Ausgangswerten der ersten CNN-Schicht in eine zweite CNN-Schicht, die eine Vielzahl anderer CNNs umfasst, umfasst, wobei eine Vielzahl von Filtern in jedem der CNNs der zweiten CNN-Schicht trainiert wird, die Vielzahl von Filtern in jedem CNN der zweiten CNN-Schicht jeweils der Vielzahl von Frequenzbändern entspricht, und wobei jedes Frequenzband des zweiten Spektrogramms durch eine Summierung von Ausgangswerten der Filter der zweiten CNN-Schicht, die dem gleichen jeweiligen Frequenzband entsprechen, erfasst wird.

14. Verfahren nach Anspruch 10, wobei das Erfassen des zweiten Spektrogramms das Eingeben der Ausgangswerte der Filter in eine Vielzahl von jeweiligen Sigmoid-Gates und das Erfassen des zweiten Spektrogramms durch eine Summierung der von der Vielzahl von Sigmoid-Gates ausgegebenen Werte, die demselben jeweiligen Frequenzband entsprechen, umfasst.

15. Nicht-flüchtiges computerlesbares Medium, in dem eine Computerinstruktion gespeichert ist, die, wenn sie von einem Prozessor (120) einer elektronischen Vorrichtung (100) ausgeführt wird, den Prozessor veranlasst, die folgenden Verfahrensschritte durchzuführen:
Erfassen eines ersten Spektrogramms, das einem beschädigten Audiosignal entspricht, einer Vielzahl von neuronalen Faltungsnetzwerken, CNNs, die jeweils einer Vielzahl von Frequenzbändern des ersten Spektrogramms entsprechen, einer Vielzahl von Filtern in jedem CNN, die jeweils der Vielzahl von Frequenzbändern entsprechen;
Eingeben jedes der Vielzahl von Frequenzbändern des ersten Spektrogramms in ein entsprechendes eines aus der Vielzahl von CNNs, um die Vielzahl von Filtern, die in dem entsprechenden einen aus der Vielzahl von CNNs trainiert werden, auf das Frequenzband anzuwenden, das in das entsprechende eine aus der Vielzahl von CNNs eingegeben wird;
Erfassen eines zweiten Spektrogramms der Vielzahl von Frequenzbändern, wobei jedes Frequenzband des zweiten Spektrogramms durch eine Summierung von Ausgangswerten der Filter erfasst wird, die dem gleichen jeweiligen Frequenzband entsprechen; und
Erfassen eines auf der Grundlage des zweiten Spektrogramms rekonstruierten Audiosignals.

## Revendications

1. Dispositif électronique (100) comprenant :
une mémoire (110) pour stocker une pluralité de filtres entraînés dans chacun d'une pluralité de réseaux neuronaux convolutifs, CNN, correspondant à une pluralité de bandes de fréquence d'un premier spectrogramme correspondant à un signal audio endommagé, la pluralité de filtres dans chaque CNN correspondant à la pluralité de bandes de fréquence respectivement ; et
un processeur (120) configuré pour :
acquérir le premier spectrogramme,
entrer chacune de la pluralité de bandes de fréquence du premier spectrogramme dans un CNN correspondant de la pluralité de CNN afin d'appliquer la pluralité de filtres formés dans le CNN correspondant de la pluralité de CNN à la bande de fréquence qui est entrée dans le CNN correspondant de la pluralité de CNN,
acquérir un deuxième spectrogramme de la pluralité de bandes de fréquence, dans lequel chaque bande de fréquence du deuxième spectrogramme est acquise par une sommation de valeurs de sortie des filtres correspondant à la même bande de fréquence respective, et
acquérir un signal audio reconstruit sur la base du deuxième spectrogramme.

2. Dispositif électronique (100) de la revendication 1, dans lequel :
la pluralité de CNN comprend un premier CNN dans lequel une première bande de fréquence du premier spectrogramme est entrée et un deuxième CNN dans lequel une deuxième bande de fréquence du premier spectrogramme est entrée,
la pluralité de filtres comprend un premier filtre et un deuxième filtre entraînés dans le premier CNN et un troisième filtre et un quatrième filtre entraînés dans le deuxième CNN,
le premier filtre et le troisième filtre sont entraînés sur la base de la première bande de fréquence et le deuxième filtre et le quatrième filtre sont entraînés sur la base de la deuxième bande de fréquence,
le processeur (120) est en outre configuré pour :
acquérir la première bande de fréquence du deuxième spectrogramme par une sommation de valeurs de sortie du premier CNN dans lequel le premier filtre est appliqué et de valeurs de sortie du deuxième CNN dans lequel le troisième filtre est appliqué, et acquérir la deuxième bande de fréquence du deuxième spectrogramme par une sommation de valeurs de sortie du premier CNN dans lequel le deuxième filtre est appliqué et de valeurs de sortie du deuxième CNN dans lequel le quatrième filtre est appliqué.

3. Dispositif électronique (100) de la revendication 1, dans lequel le processeur (120) est en outre configuré pour :
identifier le premier spectrogramme dans une unité de trame d'un intervalle de temps prédéterminé,
diviser le premier spectrogramme en une première trame à une K^{ième} unité de trame par unités de trame.

4. Dispositif électronique (100) de la revendication 1, dans lequel la pluralité de CNN constitue une première couche CNN,
dans lequel le processeur (120) est en outre configuré pour :
acquérir le deuxième spectrogramme en entrant des valeurs de sortie de la première couche CNN dans une deuxième couche CNN comprenant une pluralité d'autres CNN, une pluralité de filtres étant entraînée dans chacun des CNN de la deuxième couche CNN, la pluralité de filtres de chaque CNN de la deuxième couche CNN correspondant respectivement à la pluralité de bandes de fréquence, et chaque bande de fréquence du deuxième spectrogramme étant acquise par la sommation de valeurs de sortie des filtres de la deuxième couche CNN correspondant à la même bande de fréquence respective.

5. Dispositif électronique (100) de la revendication 1, dans lequel le processeur (120) est en outre configuré pour entrer les valeurs de sortie des filtres dans une pluralité de portes sigmoïdes respectivement, et acquérir le deuxième spectrogramme par une sommation de valeurs sorties de la pluralité de portes sigmoïdes correspondant à la même bande de fréquence respective.

6. Dispositif électronique (100) de la revendication 1, comprenant en outre :
un dispositif d'entrée,
dans lequel le processeur (120) est en outre configuré pour :
transformer le signal audio endommagé entré par l'intermédiaire du dispositif d'entrée dans un premier spectrogramme basé sur le temps et la fréquence, et
acquérir le signal audio reconstruit en transformant inversement le deuxième spectrogramme en un signal audio basé sur le temps et l'amplitude.

7. Dispositif électronique (100) de la revendication 6, dans lequel le processeur (120) est en outre configuré pour acquérir une composante d'amplitude compensée en acquérant une composante d'amplitude du premier spectrogramme et en entrant chacune des bandes de fréquence de la composante d'amplitude acquise, qui correspondent aux bandes de fréquence du premier spectrogramme, dans un CNN correspondant de la pluralité de CNN et acquérir le deuxième spectrogramme en combinant une composante de phase du premier spectrogramme et la composante d'amplitude compensée représentée par les valeurs de sortie de la sommation.

8. Dispositif électronique (100) de la revendication 1, dans lequel le processeur (120) est configuré pour n'entrer dans les CNN correspondants que des bandes de fréquence supérieures ou égales à une fréquence prédéterminée, parmi la pluralité de bandes de fréquence du premier spectrogramme.

9. Dispositif électronique (100) de la revendication 1, dans lequel le processeur (120) est en outre configuré pour normaliser le premier spectrogramme et entrer chacune de la pluralité de bandes de fréquence du premier spectrogramme normalisé dans le CNN correspondant de la pluralité de CNN, dénormaliser le deuxième spectrogramme, et acquérir le signal audio reconstruit sur la base du deuxième spectrogramme dénormalisé.

10. Procédé permettant de commander un dispositif électronique (100), le procédé comprenant :
acquérir un premier spectrogramme correspondant à un signal audio endommagé, une pluralité de réseaux neuronaux convolutionnels, CNN, correspondant respectivement à une pluralité de bandes de fréquence du premier spectrogramme, une pluralité de filtres dans chaque CNN correspondant respectivement à la pluralité de bandes de fréquence ;
entrer chacune de la pluralité de bandes de fréquence du premier spectrogramme dans un CNN correspondant de la pluralité de CNN afin d'appliquer la pluralité de filtres entraînés dans le CNN correspondant de la pluralité de CNN à la bande de fréquence qui est entrée dans le CNN correspondant ;
acquérir un deuxième spectrogramme de la pluralité de bandes de fréquence, dans lequel chaque bande de fréquence du deuxième spectrogramme est acquise par une sommation de valeurs de sortie des filtres correspondant à la même bande de fréquence respective ; et
acquérir un signal audio reconstruit sur la base du deuxième spectrogramme.

11. Procédé de la revendication 10, dans lequel :
la pluralité de CNN comprend un premier CNN dans lequel une première bande de fréquence du premier spectrogramme est entrée et un deuxième CNN dans lequel une deuxième bande de fréquence du premier spectrogramme est entrée,
la pluralité de filtres comprend un premier filtre et un deuxième filtre entraînés dans le premier CNN et un troisième filtre et un quatrième filtre entraînés dans le deuxième CNN,
le premier filtre et le troisième filtre sont entraînés sur la base de la première bande de fréquence et le deuxième filtre et le quatrième filtre sont entraînés sur la base de la deuxième bande de fréquence,
l'acquisition du deuxième spectrogramme comprend l'acquisition de la première bande de fréquence du deuxième spectrogramme par une sommation de valeurs de sortie du premier CNN dans lequel le premier filtre est appliqué et de valeurs de sortie du deuxième CNN dans lequel le troisième filtre est appliqué, et l'acquisition de la deuxième bande de fréquence du deuxième spectrogramme par une sommation de valeurs de sortie du premier CNN dans lequel le deuxième filtre est appliqué et de valeurs de sortie du deuxième CNN dans lequel le quatrième filtre est appliqué.

12. Procédé de la revendication 10, dans lequel l'entrée comprend l'identification du premier spectrogramme dans une unité de trame d'un intervalle de temps prédéterminé, la division du premier spectrogramme en une première trame à une K^{ième} unité de trame par unités de trame.

13. Procédé de la revendication 10, dans lequel la pluralité de CNN constitue une première couche CNN, et
dans lequel l'acquisition du deuxième spectrogramme comprend l'acquisition du deuxième spectrogramme par l'entrée de valeurs de sortie de la première couche CNN dans une deuxième couche CNN comprenant une pluralité d'autres CNN, une pluralité de filtres étant entraînée dans chacun des CNN de la deuxième couche CNN, la pluralité de filtres dans chaque CNN de la deuxième couche CNN correspond à la pluralité de bandes de fréquence respectivement, et chaque bande de fréquence du deuxième spectrogramme étant acquise par une sommation de valeurs de sortie des filtres de la deuxième couche CNN correspondant à la même bande de fréquence respective.

14. Procédé de la revendication 10, dans lequel l'acquisition du deuxième spectrogramme comprend l'entrée de valeurs de sortie des filtres dans une pluralité de portes sigmoïdes respectivement, et l'acquisition du deuxième spectrogramme par une sommation de valeurs de sortie de la pluralité de portes sigmoïdes correspondant à la même bande de fréquence respective.

15. Support lisible par ordinateur non transitoire sur lequel sont stockées des instructions informatiques qui, lorsqu'elles sont exécutées par un processeur (120) d'un dispositif électronique (100), amènent le processeur à effectuer les étapes de procédé suivantes :
acquérir un premier spectrogramme correspondant à un signal audio endommagé, une pluralité de réseaux neuronaux convolutionnels, CNN, correspondant respectivement à une pluralité de bandes de fréquence du premier spectrogramme, une pluralité de filtres dans chaque CNN correspondant respectivement à la pluralité de bandes de fréquence ;
entrer chacune de la pluralité de bandes de fréquence du premier spectrogramme dans un CNN correspondant de la pluralité de CNN afin d'appliquer la pluralité de filtres entraînés dans le CNN correspondant de la pluralité de CNN à la bande de fréquence qui est entrée dans le CNN correspondant de la pluralité de CNN ;
acquérir un deuxième spectrogramme de la pluralité de bandes de fréquence, dans lequel chaque bande de fréquence du deuxième spectrogramme est acquise par une sommation de valeurs de sortie des filtres correspondant à la même bande de fréquence respective ; et
acquérir un signal audio reconstruit sur la base du deuxième spectrogramme.
